# EUROPÄISCHE PATENTSCHRIFT

(11) **EP 2 243 750 B1**
(45) Veröffentlichungstag und Bekanntmachung des Hinweises auf die Patenterteilung: **10.02.2016**
(21) Anmeldenummer: 10003455.2
(22) Anmeldetag: 30.03.2010
(51) Int. Cl.: C03C 17/245, C03C 17/23, C03C 17/34

(54) **HERSTELLUNG UND VERWENDUNG EINER TRANSPARENTEN GLASKERAMIKSCHEIBE MIT EINER INFRAROTSTRAHLUNG REFLEKTIERENDEN SCHICHT**
MAKING AND USE OF TRANSPARENT GLASS-CERAMIC PLATE WITH INFRARED-REFLECTING LAYER
FABRICATION ET UTILISATION D'UNE VITRE EN VITROCÉRAMIQUE REVÊTUE D'UNE COUCHE RÉFLÉCHISSANT LE RAYONNEMENT INFRAROUGE

(30) Priorität: 31.03.2009 DE 102009015086
(43) Veröffentlichungstag der Anmeldung: 27.10.2010
(73) Patentinhaber: Schott AG, 55122 Mainz (DE)
(72) Erfinder: Henn, Christian, 55546 Frei-Laubersheim (DE); Luther, Veit, 65795 Hattersheim (DE); Hahn, Andreas, 55606 Hochstetten-Dhaun (DE); Schmidbauer, Wolfgang, Dr., 55126 Mainz (DE); Gabelmann, Torsten, 65199 Wiesbaden (DE)
(74) Vertreter: Blumbach Zinngrebe

(56) Entgegenhaltungen:
- US-A1- 2005 064 205
- US-B1- 6 416 890
- DATABASE WPI Week 198928 Thomson Scientific, London, GB; AN 1989-201349 XP002588607 -& JP 1 138159 A (NIPPON SHEET GLASS CO LTD) 31. Mai 1989 (1989-05-31)
- DATABASE WPI Week 199609 Thomson Scientific, London, GB; AN 1996-082366 XP002588608 -& JP 7 333423 A (HITACHI MAXELL KK) 22. Dezember 1995 (1995-12-22)
- Werner Vogel: "Glass Chemistry", 1994, XP007919456, ISBN: 0-387-57572-3 * figure 7.12; table 10.1 *

## Beschreibung

### Gebiet der Erfindung

Die Erfindung betrifft die Verwendung einer Infrarotstrahlung reflektierende Glaskeramikscheibe sowie ein Verfahren zu deren Herstellung. Insbesondere betrifft die Erfindung eine Sichtscheibe für Hochtemperaturanwendungen, beispielsweise eine Vorsatzscheibe für einen Ofen oder einen Kamin, sowie eine Feuerschutzverglasung.

### Hintergrund der Erfindung

Infrarotstrahlung reflektierende Scheiben, insbesondere Sichtscheiben für Öfen oder Kamine, sind bekannt. Diese sind in der Regel als Substrat aus einem Glas mit einem niedrigen thermischen Ausdehnungskoeffizienten oder aus Glaskeramik ausgebildet. Auf dem Substratglas ist eine Beschichtung aufgebracht, welche im Infrarotbereich eine geringere Transmission besitzt als im Bereich des sichtbaren Lichtes.

So wird die Infrarotstrahlung, welche durch die Scheibe durchtritt, erheblich reduziert und es wird sowohl eine starke Aufheizung der Scheibe als auch eine starke Aufheizung der angrenzenden Umgebung vermieden.

Aus der Praxis bekannt sind beispielsweise Titanoxid/Siliziumoxid- Beschichtungen, insbesondere als Interferenz-Wechselschichtsysteme, welche aber aus wirtschaftlichem Gesichtspunkt nicht umsetzungsrelevant sind.

Nachteilig an bekannten Beschichtungen ist neben dem hohen Aufwand zur Aufbringung derartiger Schichten die geringe Hitzebeständigkeit, insbesondere verlieren viele bekannte transparente leitfähige Beschichtungen (TCC's) bei Temperaturen von über 450° C dauerhaft ihre reflektierende Wirkung.

Weiter sind herkömmliche Beschichtungen für gebogene Glaskeramiken nur bedingt geeignet, da es schwierig ist, ein gebogenes Glas mit einer homogenen Schichtdicke zu versehen.

Eine Beschichtung des Rohlings (Grünglases) vor dem Keramisieren und Biegen ist dagegen in der Regel nicht möglich, da herkömmliche Beschichtungen beim Keramisieren beschädigt oder zerstört würden.

Das Dokument US 2005/0064205 A1 zeigt eine Glaskeramikscheibe, welche als Sichtschutzscheibe für Öfen vorgesehen ist. Diese umfasst ein Mehrschichtsystem, welches unter anderem eine 10 nm dünne Titanoxidschicht umfasst.

### Aufgabe der Erfindung

Der Erfindung liegt demgegenüber die Aufgabe zugrunde, eine Infrarotstrahlung reflektierende, hitzebeständige transparente Glaskeramikscheibe bereitzustellen, bei welcher die Nachteile des Standes der Technik zumindest reduziert sind.

Insbesondere soll die Glaskeramikscheibe einfach und kostengünstig herzustellen sein und eine gleichmäßige optische Anmutung haben.

### Zusammenfassung der Erfindung

Die Aufgabe der Erfindung wird bereits durch die Verwendung einer transparenten Glaskeramikscheibe sowie durch ein Verfahren zur Herstellung einer Infrarotstrahlung reflektierenden transparenten Glaskeramikscheibe nach einem der unabhängigen Ansprüche gelöst.

Bevorzugte Ausführungsformen und Weiterbildungen der Erfindung sind den jeweiligen Unteransprüchen zu entnehmen.

Die transparente Glaskeramikscheibe kann ein Glaskeramiksubstrat mit einem thermischen Ausdehnungskoeffizienten α von weniger als 4,2, bevorzugt von weniger als 3,5 umfassen.

Es handelt sich somit gemäß der Erfindung um ein sogenanntes Null-Ausdehnungsmaterial, eine Glaskeramik. Unter "transparent" wird verstanden, dass die Scheibe im sichtbaren Bereich eine hinreichende Transmission aufweist, um durch die Scheibe durchblicken zu können, die Scheibe somit als Sichtscheibe geeignet ist. Es versteht sich, dass aber auch eine getönte Scheibe noch als "transparent" im Sinne der Erfindung verstanden wird.

Auf dem transparenten Glaskeramiksubstrat ist eine ebenfalls im sichtbaren Bereich transparente, Infrarotstrahlung reflektierende Schicht aufgebracht, welche kristallin ist und Nioboxid, Titanoxid oder Tantaloxid umfasst. Die Infrarotstrahlung reflektierende Schicht ist gemäß der Erfindung als Einschicht-Reflexionsschicht mit einer Brechzahl größer 2,2 ausgebildet. Vorzugsweise beträgt die Brechzahl mehr als 2,4.

Unter einer Einschicht-Reflexionsschicht wird eine Schicht verstanden, welche im Gegensatz zu nach dem Interferenz-Prinzip arbeitenden Wechselschichtsystemen bereits als einzelne Schicht Infrarotstrahlung reflektierende Eigenschaften aufweist. Hierzu haben sich Schichten mit einer hohen Brechzahl und insbesondere, wie es bei einer bevorzugten Ausführungsform der Erfindung vorgesehen ist, Titanoxidschichten als geeignet erwiesen.

Die Definition als Einschicht-Reflexionsschicht schließt nicht aus, dass mehrere Schichten vorhanden sind.

Die Erfinder haben herausgefunden, dass als kristalline Schicht ausgebildete Schichten auf einem Substrat abgeschieden werden können und dabei ohne thermische Nachbehandlung transparent sind und Infrarot reflektierende Eigenschaften aufweisen. Als Alternative zu Titanoxid kommen gemäß der Erfindung Nioboxid und Tantaloxid in Betracht.

Titanoxid ist besonders preiswert und lässt sich, wie die Erfinder herausgefunden haben, insbesondere durch Abscheideverfahren wie Sputtern als kristalline Schicht aufbringen. Es handelt sich dabei insbesondere um Titanoxid in der Anatase-Phase oder in der Rutil-Phase.

Bei einer Ausführungsform der Erfindung grenzt die Infrarotstrahlung reflektierende Schicht unmittelbar an das Glaskeramiksubstrat an. Die Schicht ist also ohne weitere Zwischenschichten aufgetragen. Die Erfinder haben herausgefunden, dass insbesondere auf Flachgläsern Titanoxidschichten direkt auf das Glassubstrat abgeschieden werden können und dabei eine abriebfeste kristalline Schicht ausbilden.

Vorzugsweise wird das Glaskeramiksubstrat vor dem Aufbringen der Schicht erwärmt, insbesondere auf 200 bis 400 °C, was die Haftbeständigkeit der Schicht weiter verbessert.

Bei einer alternativen Ausführungsform der Erfindung ist zwischen der Infrarotstrahlung reflektierenden Schicht und dem Glaskeramiksubstrat eine Haftvermittlerschicht angeordnet.

Als Haftvermittlerschichten kommen beispielsweise Siliziumoxid, Aluminiumoxid oder abgeschiedene weiche Silizium haltige Schichten mit hohem Kohlenstoffanteil in Betracht.

Die Verwendung einer Haftvermittlerschicht als Zwischenschicht ist insbesondere dann vorgesehen, wenn das Glas nach der Beschichtung weiter verarbeitet wird, wobei es hohen thermischen und/oder mechanischen Belastungen unterliegt.

Haftvermittlerschichten können insbesondere sicher stellen, dass die erfindungsgemäße Infrarotstrahlung reflektierende Schicht aufgetragen auf ein Grünglas auch einen nachfolgenden Keramisierungsprozess übersteht, gegebenenfalls auch das Verformen, insbesondere Biegen des erhitzten Glaskeramiksubstrats zu einer gebogenen Scheibe.

Die Infrarotstrahlung reflektierende Schicht kann eine Dicke zwischen 20 und 600 nm, vorzugsweise zwischen 50 und 400 nm, besonders bevorzugt zwischen 70 und 200 nm aufweisen.

Die Erfinder haben herausgefunden, dass über die Schichtdicke insbesondere der Farbeindruck der Scheibe als auch das Reflexionsmaximum im Infraroten gesteuert werden kann.

Bereits bei einer Wellenlänge ab 1000 nm, vorzugsweise bereits ab 800 nm und besonders bevorzugt ab 700 nm weist bei einer bevorzugten Aufgabe der Erfindung die Glaskeramikscheibe bereits einen Reflexionsgrad von mehr als 20, vorzugsweise von mehr als 30 % auf.

Im Bereich des sichtbaren Lichtes beträgt der mittlere Transmissionsgrad dagegen mehr als 40, vorzugsweise mehr als 50 und besonders bevorzugt mehr als 70 %.

Die transparente Glaskeramikscheibe kann, insbesondere durch Verwendung verschieden dicker Titanoxidschichten farbig ausgebildet sein, insbesondere einen gelben, roten, grünen oder blauen Farbeindruck aufweisen.

Die Erfindung betrifft insbesondere gebogene Glaskeramikscheiben.

Bei einer besonderen Ausführungsform der Erfindung hat die Infrarotstrahlung reflektierende Schicht ein Reflexionsmaximum bereits bei unter 2500, vorzugsweise unter 2000 und besonders bevorzugt unter 1600 nm. Dies ist insbesondere dann wichtig, wenn hohe Einsatztemperaturen auftreten, da dann das Maximum der Emissionen in einem niedrigen Wellenlängenbereich kleiner 2,5µm liegt.

Weiter sind insbesondere abgeschiedene kristalline Titanoxidschichten für eine Dauereinsatztemperatur von mehr als 600, vorzugsweise von mehr als 800 °C ausgebildet.

Bei einer Weiterbildung der Erfindung ist auf der Infrarotstrahlung reflektierenden Schicht eine weitere Schicht, insbesondere eine Entspiegelungsschicht angeordnet. So kann beispielsweise auf die Infrarotstrahlung reflektierende Schicht auch ein Wechselschichtsystem abgeschieden werden, welches Reflexionen im Bereich des sichtbaren Lichtes reduziert. Die reflektierenden Eigenschaften im Infrarotbereich bleiben dabei erhalten.

Auch ist denkbar, wie es bei einer Weiterbildung der Erfindung vorgesehen ist, eine weitere Schicht aufzubringen, welche eine Einfärbung aufgrund der Infrarotstrahlung reflektierenden Schicht neutralisiert. Insbesondere kann eine farbige Schicht aufgebracht werden, welche den Farbeindruck der Infrarotstrahlung reflektierenden Schicht kompensiert.

Die Infrarotstrahlung reflektierende Schicht ist bei einer gemäß der Erfindung als dichte Schicht mit einem Porositätsgrad von weniger als 10 % ausgebildet, vorzugsweise von weniger als 5, besonders bevorzugt von weniger als 2 %.

Erfindungsgemäße Infrarotstrahlung reflektierende Schichten können ein Reflexionsmaximum in einem Wellenlängenbereich zwischen 700 und 2000, vorzugsweise zwischen 800 und 1700 nm aufweisen.

Die Erfindung betrifft die Verwendung als Vorsatzscheibe für einen Kamin oder Ofen, sowie für Feuerschutzverglasungen, also für Feuerschutztüren oder Fenster. Auch für eine Ofenmuffel kann die erfindungsgemäße Scheibe verwendet werden.

Die Erfindung betrifft des Weiteren ein Verfahren zur Herstellung einer Infrarotstrahlung reflektierenden transparenten Glaskeramikscheibe, insbesondere wie vorstehend beschrieben.

Es wird ein Glaskeramiksubstrat mit einem thermischen Ausdehnungskoeffizienten α von weniger als 4,2, vorzugsweise von weniger als 3,5 bereitgestellt.

Auf das Glaskeramiksubstrat wird eine Infrarotstrahlung reflektierende Schicht mit einer Brechzahl größer 2,2 aufgebracht.

Vorzugsweise wird die Infrarotstrahlung reflektierende Schicht als kristalline Schicht abgeschieden. Insbesondere mittels eines Magnetron-Sputterverfahrens können auch große Flächen mit einheitlicher Schichtdicke beschichtet werden.

Insbesondere können reaktive Sputterverfahren verwendet werden, bei welchen ein metallisches Titantarget verwendet wird.

Gemäß einem Ausführungsbeispiel der Erfindung wird eine 150 bis 250, insbesondere eine etwa 200 nm dicke Titanoxidschicht auf ein flaches Glaskeramiksubstrat mittels Mittelfrequenz-Sputtern abgeschieden. Hierzu wird das Substrat in einem Vorbehandlungsschritt thermisch vorbehandelt, vorzugsweise bei einer Temperatur von 350 bis 450° C über eine Zeitdauer von mindestens 3 Minuten, vorzugsweise über 10 Minuten.

Das Ausheizen erfolgt vorzugsweise im Vakuum und führt dazu, dass überschüssiges Wasser von der Substratoberfläche verdampft.

Anschließend wird das Substrat in die Prozesskammer verbracht und die Titanoxidschicht wird unter mehrfachem Vorbeifahren an einer Sputterquelle reaktiv abgeschieden. Es kann dabei eine Pulsfrequenz von 5 bis 10 kHz eingestellt werden und so eine hohe Sputterleistung von 15 W/cm² gewählt werden.

Durch den sich dabei einstellenden hohen Teilchenstrom bei gleichzeitig geringem Prozessdruck von etwa 10⁻³ mbar lassen sich dichte Titanoxidschichten mit ausgeprägter Kristallphase herstellen, was in einer hohen Transparenz im sichtbaren Bereich und gleichzeitig zu einer hohen Brechzahl der Beschichtung führt.

Der Prozess kann reaktiv von einem metallischen Titantarget gesputtert werden. Zur Stabilisierung des Prozesses ist dabei eine Regelung erforderlich.

Alternativ kann daher auch von einem keramischen TiO₂-Target gesputtert werden und so auf eine aufwendige Regelung der Plasmaintensität verzichtet werden.

Nach der Herstellung der Schicht kann das mit einer Titanoxidschicht beschichtete Substrat beispielsweise als Kaminsichtscheibe verwendet werden.

### Kurzbeschreibung der Zeichnungen

Die Erfindung soll im Folgenden Bezug nehmend auf schematisch dargestellte Ausführungsbeispiele anhand der Zeichnungen Fig. 1 bis Fig. 5 näher erläutert werden.
- Fig. 1: zeigt schematisch dargestellt eine transparente Glaskeramikscheibe,
- Fig. 2: zeigt den spektralen Reflexionsgrad verschiedener Titanoxidbeschichtungen gemäß der Erfindung,
- Fig. 3: zeigt den spektralen Reflexionsgrad eines Ausführungsbeispiels einer Titanoxidbeschichtung, welche vor einem Keramisierungsprozess aufgebracht wurde,
- Fig. 4: zeigt die spektralen Reflexionsverläufe eines herkömmlichen Infrarot-reflektierenden Glases vor und nach einer thermischen Belastung,
- Fig. 5: zeigt schematisch ein Flussdiagramm eines Verfahrens zur Herstellung einer transparenten Glaskeramikscheibe gemäß einem Ausführungsbeispiel.

### Detaillierte Beschreibung der Zeichnungen

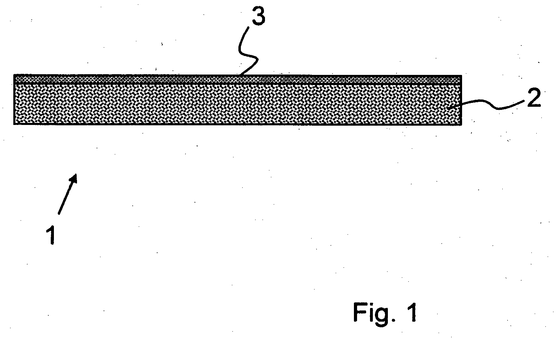

Fig. 1 zeigt schematisch dargestellt eine transparente Glaskeramikscheibe 1, welche eine thermische Ausdehnung α von weniger als 4,2 aufweist.

Auf das Glassubstrat 2 ist eine Titanoxidschicht 3 aufgebracht, welche eine Brechzahl größer 2,3 aufweist und so als transparente Einschicht-Reflexionsschicht wirkt.

Dabei reflektiert die Titanoxidschicht 3 primär im Infrarotbereich.

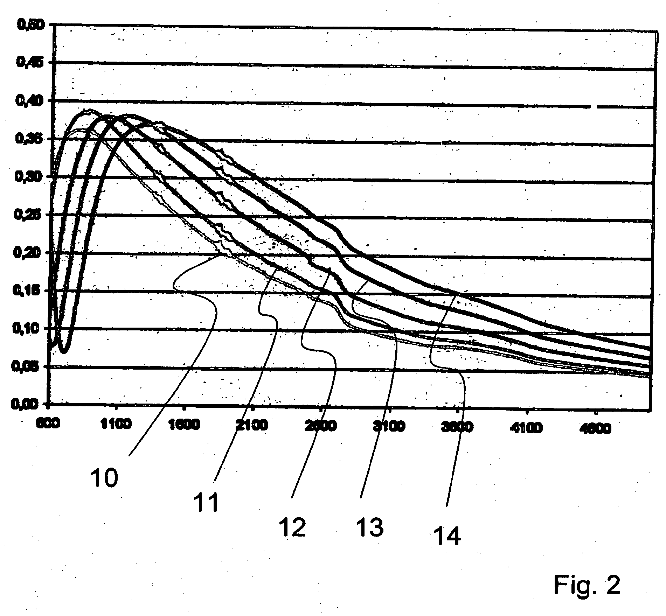

Fig. 2 zeigt schematisch den Verlauf des spektralen Reflexionsgrades verschiedener Ausführungsbeispiele einer aus Titanoxid ausgebildeten Infrarotstrahlung reflektierenden Schicht unter Variation der Schichtdicke.

Auf der x-Achse ist die Wellenlänge in Nanometern und auf der y-Achse der spektrale Reflexionsgrad aufgetragen.

Kurve 10 zeigt eine etwa 80 nm dicke Titanoxidschicht mit gelber Anmutung. Kurve 11 zeigt eine etwa 90 nm dicke Titanoxidschicht, die eine etwa orangefarbene Anmutung hat. Eine 95 nm dicke Titanoxidschicht, wie in Kurve 12 dargestellt, hat eine rote Farbanmutung. Die Titanoxidschicht gemäß Kurve 13 ist etwa 127 nm dick und hat eine blaue Anmutung. Eine 150 nm dicke Titanoxidschicht ist in Kurve 14 dargestellt, welche eine grüne Farbanmutung hat.

Zu erkennen ist, dass der maximale Reflexionsgrad aller dargestellten Schichten ein Maximum bei einer Wellenlänge zwischen 700 und 1700 nm aufweist. An der Stelle des Maximums beträgt der spektrale Reflexionsgrad bei allen Ausführungsbeispielen über 0,35.

Weiter ist zu erkennen, dass die maximale Reflexion aller dargestellten Beschichtungen bei unter 1600 nm liegt, die Infrarotstrahlung reflektierende Beschichtung somit bereits in einem recht niederfrequenten Bereich des Infrarotspektrums wirksam ist, wohingegen herkömmliche Infrarotstrahlung reflektierende Beschichtungen (TCO's) häufig erst bei über 3000 nm eine spürbare Wirksamkeit aufgrund deren Plasmakante erreichen.

Weiter ist zu erkennen, dass über die Dicke der Schicht sowohl die Farbanmutung als auch die Lage des Reflexionsmaximumsbestimmt werden kann.

Die Beschichtung kann so auf besonders einfache Weise dem jeweiligen Anwendungszweck angepasst werden. Falls eine farbige Anmutung nicht erwünscht ist, ist es dabei auch möglich, das Substrat mit einer weiteren Schicht zu versehen, welche den Farbstich neutralisiert.

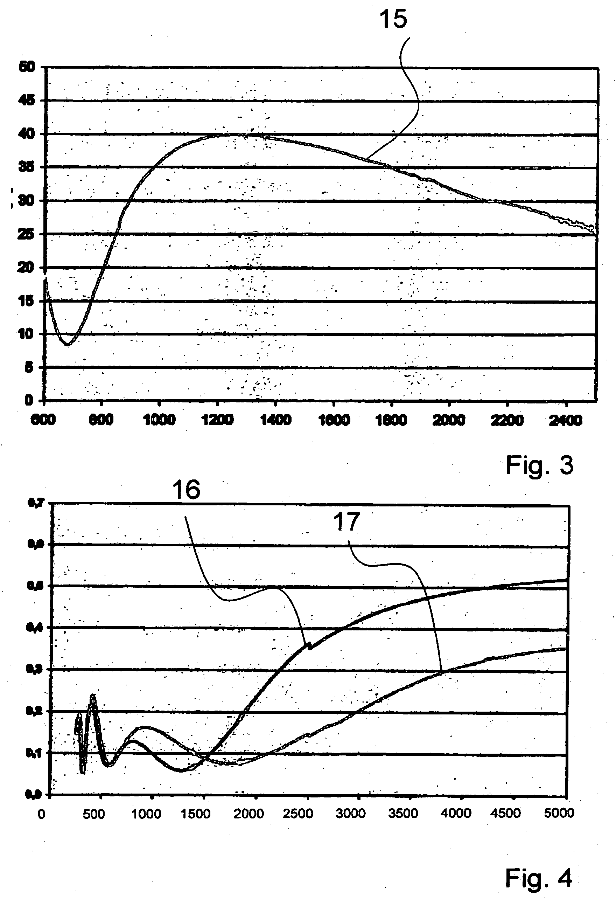

Die in Fig. 3 dargestellte Kurve 15 zeigt ebenfalls den Verlauf des spektralen Reflexionsgrades einer Titanoxidschicht. Auch hier ist auf der x-Achse die Wellenlänge und auf der y-Achse der spektrale Reflexionsgrad, hier in Prozent, aufgetragen.

Bei der Titanoxidschicht gemäß Kurve 15 handelt es sich um eine mittels eines Magnetron-Sputterverfahrens abgeschiedenen Titanoxidschicht, welche auf ein Grünglas bereits vor dem Keramisierungsprozess abgeschieden wurde.

Das entsprechende Grünglas-Substrat wurde nach dem Abscheiden der Titanoxidschicht keramisiert und dabei verformt.

Die Kurve 15 gibt den Verlauf des spektralen Reflexionsgrades nach dem Keramisieren wieder.

Zu erkennen ist, dass trotz der thermischen Belastung während des Keramisierungsprozesses die Beschichtung ein Maximum des spektralen Reflexionsgrades von knapp 40 % hat, das Reflexionsmaximum liegt weiterhin bei unter 1200 nm. Die erfindungsgemäßen Infrarotstrahlung reflektierenden Titanoxidschichten sind somit hoch temperaturbeständig.

Fig. 4 zeigt dagegen den spektralen Reflexionsgrad einer herkömmlichen Infrarotstrahlung reflektierenden Scheibe auf Basis einer TCO Schicht.

Auch hier ist auf der x-Achse die Wellenlänge in Nanometern und auf der y-Achse der spektrale Reflexionsgrad aufgetragen.

Kurve 16 zeigt den spektralen Reflexionsgrad vor einer Temperaturbelastung. Zu erkennen ist, dass hier die Plasmakante oberhalb von 2000 nm liegt. Ein Reflexionsgrad von mehr als 0,25 liegt daher erst in einem relativ langwelligen Bereich.

Kurve 17 zeigt den Reflexionsgrad der Glasscheibe nach einer thermischen Belastung bei 550 °C über 100 Stunden. Zu erkennen ist, dass der Reflexionsgrad im Infrarotbereich erheblich abgenommen hat. Beispielsweise hat sich der spektrale Reflexionsgrad bei einer Wellenlänge zwischen 2000 und 4000 nm in etwa halbiert.

Die Scheibe hat somit ihre Infrarotstrahlung reflektierenden Eigenschaften zum großen Teil verloren und ist daher nicht für Langzeit-Temperaturbelastungen geeignet.

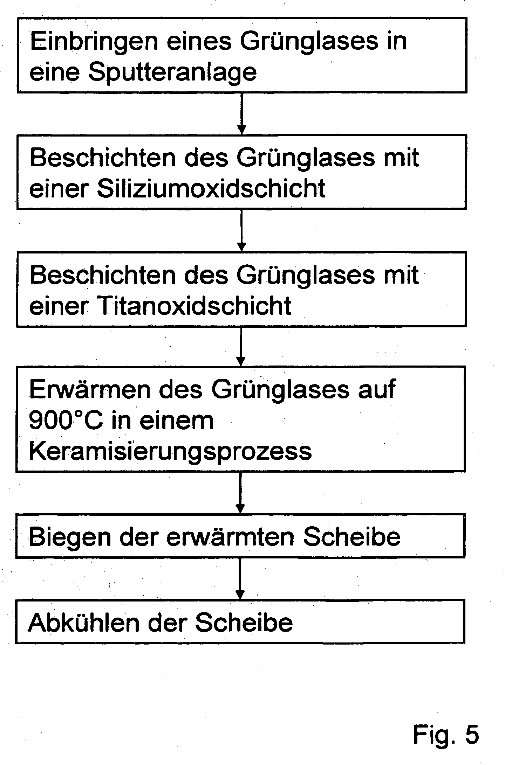

Bezug nehmend auf Fig. 5 sollen die wesentlichen Verfahrensschritte eines Verfahrens zum Aufbringen einer Infrarotstrahlung reflektierenden Einschicht-Reflexionsschicht gemäß eines Ausführungsbeispiels der Erfindung erläutert werden.

Zunächst wird ein Grünglas, also ein nicht keramisiertes Glassubstrat, in eine Sputteranlage eingebracht.

Sodann wird das Grünglas z.B. mit einer Siliziumoxidschicht, welche als Haftvermittlerschicht wirkt, in einem Sputterprozess beschichtet. Aber auch andere Möglichkeiten zur Aufbringung der Siliziumoxid sind denkbar.

Sodann wird das Grünglas z.B. mit einer Titanoxidschicht beschichtet, welche als Einschicht-Reflexionsschicht ausgebildet wird.

In einem Keramisierungsprozess wird das Grünglas sodann auf 900 °C erwärmt, noch im heißen Zustand wird die Scheibe gebogen.

Nach dem Abkühlen der Scheibe erhält man eine verformte Glaskeramikscheibe mit Infrarotstrahlung reflektierenden Eigenschaften. Die Titanoxidschicht ist derart hitzebeständig, dass sie den Keramisierungsprozess überstanden hat.

Die Erfindung ermöglicht so eine einfache und effiziente Aufbringung von hitzebeständigen Infrarotstrahlung reflektierenden Beschichtungen.

## Patentansprüche

1. Verwendung einer transparenten Glaskeramikscheibe als Vorsatzscheibe für einen Ofen oder Kamin oder Feuerschutztür oder -fenster, umfassend ein als Null-Ausdehnungsmaterial ausgebildetes Glaskeramiksubstrat und eine als Einschicht-Reflexionsschicht ausgebildete Infrarotstrahlung reflektierende kristalline dichte Schicht mit einem Porositätsgrad von weniger als 10 %, welche Titanoxid, Nioboxid oder Tantaloxid umfasst und welche eine Brechzahl größer 2,2 aufweist und wobei die Glaskeramikscheibe im Bereich des sichtbaren Lichtes einen mittleren Transmissionsgrad von mehr als 40 % aufweist.

2. Verwendung nach Anspruch 1, **dadurch gekennzeichnet, dass** die Infrarotstrahlung reflektierende Schicht unmittelbar an das Glaskeramiksubstrat angrenzt.

3. Verwendung nach Anspruch 1, **dadurch gekennzeichnet, dass** zwischen der Infrarotstrahlung reflektierenden Schicht und dem Glaskeramiksubstrat eine Haftvermittlerschicht angeordnet ist.

4. Verwendung nach einem der vorstehenden Ansprüche, **dadurch gekennzeichnet, dass** die Infrarotstrahlung reflektierende Schicht eine Dicke zwischen 20 und 600 nm, vorzugsweise zwischen 50 und 400 nm, besonders bevorzugt zwischen 70 und 200 nm aufweist.

5. Verwendung nach einem der vorstehenden Ansprüche, **dadurch gekennzeichnet, dass** die Glaskeramikscheibe bei einer Wellenlänge ab 1000nm, vorzugsweise ab 800 nm, besonders bevorzugt ab 700 nm einen Reflexionsgrad von mehr als 20, vorzugsweise mehr als 30 % aufweist.

6. Verwendung nach einem der vorstehenden Ansprüche, **dadurch gekennzeichnet, dass** die Glaskeramikscheibe im Bereich des sichtbaren Lichtes einen mittleren Transmissionsgrad von mehr als 50 und bevorzugt von mehr als 70 % aufweist.

7. Verwendung nach einem der vorstehenden Ansprüche, **dadurch gekennzeichnet, dass** die Glaskeramikscheibe verformt, insbesondere gebogen, ausgebildet ist.

8. Verwendung nach einem der vorstehenden Ansprüche, **dadurch gekennzeichnet, dass** auf der Infrarotstrahlung reflektierenden Schicht eine weitere Schicht, insbesondere eine Entspiegelungsschicht, angeordnet ist.

9. Verwendung nach einem der vorstehenden Ansprüche, **dadurch gekennzeichnet, dass** die Infrarotstrahlung reflektierende Schicht als dichte Schicht mit einem Porositätsgrad von weniger als 5 und bevorzugt weniger als 2 % ausgebildet ist.

10. Verwendung nach einem der vorstehenden Ansprüche, **dadurch gekennzeichnet, dass** die Infrarotstrahlung reflektierende Schicht ein Reflexionsmaximum in einem Wellenlängenbereich zwischen 700 und 2000, vorzugsweise zwischen 800 und 1700 nm aufweist.

11. Verfahren zur Herstellung einer Infrarotstrahlung reflektierenden transparenten als Null-Ausdehnungsmaterial ausgebildeten Glaskeramikscheibe, umfassend die Schritte:
- Bereitstellen eines Grünglases,
- Aufbringen einer Infrarotstrahlung reflektierenden kristallinen Einschicht-Reflexionsschicht mittels eines Sputterverfahrens mit einer Brechzahl größer 2,2 auf dem Grünglas, wobei die Infrarotstrahlung reflektierende Schicht auf einem Grünglas abgeschieden wird, welches danach keramisiert wird.

12. Verfahren zur Herstellung einer Infrarotstrahlung reflektierenden transparenten Glaskeramikscheibe nach dem vorstehenden Anspruch, **dadurch gekennzeichnet, dass** die Scheibe im heißen Zustand verformt, insbesondere gebogen, wird.

13. Verfahren zur Herstellung einer Infrarotstrahlung reflektierenden transparenten Glaskeramikscheibe nach einem der vorstehenden Ansprüche, **dadurch gekennzeichnet, dass** das Glaskeramiksubstrat nach dem Abscheiden der Infrarotstrahlung reflektierenden Schicht auf mindestens 550°C, vorzugsweise mindestens 850 °C erwärmt wird.

14. Verfahren zur Herstellung einer Infrarotstrahlung reflektierenden transparenten Glaskeramikscheibe nach einem der vorstehenden Ansprüche, **dadurch gekennzeichnet, dass** die Infrarotstrahlung reflektierende Schicht in einer Dicke zwischen 20 und 600 nm, vorzugsweise zwischen 50 und 400 nm, besonders bevorzugt zwischen 70 und 200 nm abgeschieden wird.

## Claims

1. Use of a transparent glass ceramic plate as a front panel for an oven or fireplace or fire door or window, comprising a zero expansion material glass ceramic substrate and a crystalline dense infrared radiation reflecting single-layer reflection layer having a porosity of less than 10 %, comprising titanium oxide, niobium oxide, or tantalum oxide, and having a refractive index of greater than 2.2, and wherein the glass ceramic plate exhibits an average transmittance of more than 40 % in the range of visible light.

2. Use according to claim 1, **characterized in that** the infrared radiation reflecting layer is disposed immediately adjacent to the glass ceramic substrate.

3. Use according to claim 1, **characterized in that** an adhesion promoting layer is disposed between the infrared radiation reflecting layer and the glass ceramic substrate.

4. Use according to any of the preceding claims, **characterized in that** the infrared radiation reflecting layer has a thickness between 20 and 600 nm, preferably between 50 and 400 nm, more preferably between 70 and 200 nm.

5. Use according to any of the preceding claims, **characterized in that** the glass ceramic plate exhibits a reflectance of more than 20 %, preferably more than 30 % at a wavelength above 1000 nm, preferably above 800 nm, more preferably above 700 nm.

6. Use according to any of the preceding claims, **characterized in that** in the range of visible light the glass ceramic plate exhibits an average transmittance of more than 50 % and preferably more than 70 %.

7. Use according to any of the preceding claims, **characterized in that** the glass ceramic plate is altered in shape, in particular bent.

8. Use according to any of the preceding claims, **characterized in that** a further layer is disposed on the infrared radiation reflecting layer, in particular an anti-reflective layer.

9. Use according to any of the preceding claims, **characterized in that** the infrared radiation reflecting layer is formed as a dense layer having a porosity of less than 5 % and preferably less than 2 %.

10. Use according to any of the preceding claims, **characterized in that** the infrared radiation reflecting layer exhibits a reflection peak in a range of wavelengths between 700 and 2000 nm, preferably between 800 and 1700 nm.

11. A method for producing an infrared radiation reflecting transparent zero expansion material glass ceramic plate, comprising the steps of:
- providing a green glass,
- applying, on the green glass, an infrared radiation reflecting crystalline single-layer reflection layer using a sputtering process, which layer has a refractive index of greater than 2.2, which infrared radiation reflecting layer is deposited on a green glass which is subsequently ceramized.

12. The method for producing an infrared radiation reflecting transparent glass ceramic plate according to the preceding claim, **characterized in that** the plate is altered in shape, in particular bent, in hot state.

13. The method for producing an infrared radiation reflecting transparent glass ceramic plate according to any of the preceding claims, **characterized in that** after the deposition of the infrared radiation reflecting layer the glass ceramic substrate is heated to at least 550 °C, preferably at least 850 °C.

14. The method for producing an infrared radiation reflecting transparent glass ceramic plate according to any of the preceding claims, **characterized in that** the infrared radiation reflecting layer is deposited in a thickness between 20 and 600 nm, preferably between 50 and 400 nm, more preferably between 70 and 200 nm.

## Revendications

1. Utilisation d'un vitrage en vitrocéramique comme plaque frontale pour un four ou une cheminée ou une porte ou une fenêtre anti-incendie, comprenant un substrat en vitrocéramique constitué d'un matériau à dilatation nulle et une couche dense cristalline réfléchissant le rayonnement ultraviolet conçue sous la forme d'une monocouche de réflexion et ayant un degré de porosité inférieur à 10 %, ladite couche comprenant de l'oxyde de titane, de l'oxyde de niobium ou de l'oxyde de tantale et présentant un indice de réfraction supérieur à 2,2 et dans laquelle le vitrage en vitrocéramique présente un degré de transmission moyen supérieur à 40 % dans le domaine de la lumière visible.

2. Utilisation selon la revendication 1, **caractérisée en ce que** la couche réfléchissant le rayonnement infrarouge est directement adjacente au substrat en vitrocéramique.

3. Utilisation selon la revendication 1, **caractérisée en ce qu'**une couche adhérente est disposée entre la couche réfléchissant le rayonnement infrarouge et le substrat en vitrocéramique.

4. Utilisation selon l'une des revendications précédentes, **caractérisée en ce que** la couche réfléchissant le rayonnement infrarouge présente une épaisseur située entre 20 et 600 nm, de préférence entre 50 et 400 nm, en particulier préférentiellement entre 70 et 200 nm.

5. Utilisation selon l'une des revendications précédentes, **caractérisée en ce que** le vitrage en vitrocéramique présente un degré de réflexion supérieur à 20, de préférence supérieur à 30 % à une longueur d'ondes à partir de 1000 nm, de préférence à partir de 800 nm, en particulier préférentiellement à partir de 700 nm.

6. Utilisation selon l'une des revendications précédentes, **caractérisée en ce que** le vitrage en vitrocéramique présente un degré de transmission moyen supérieur à 50 % et de préférence supérieur à 70 %, dans le domaine de la lumière visible.

7. Utilisation selon l'une des revendications précédentes, **caractérisée en ce que** le vitrage en vitrocéramique est déformé, en particulier courbé.

8. Utilisation selon l'une des revendications précédentes, **caractérisée en ce qu'**une autre couche, en particulier une couche anti-reflet, est disposée sur la couche réfléchissant le rayonnement infrarouge.

9. Utilisation selon l'une des revendications précédentes, **caractérisée en ce que** la couche réfléchissant le rayonnement infrarouge est conçue sous la forme d'une couche dense ayant un degré de porosité inférieur à 5 et de préférence inférieur à 2 %.

10. Utilisation selon l'une des revendications précédentes, caractérisée en ce la couche réfléchissant le rayonnement infrarouge a un maximum de réflexion situé dans une plage de longueurs d'ondes située entre 700 et 2000, de préférence entre 800 et 1700 nm.

11. Procédé de fabrication d'un vitrage en vitrocéramique transparent constitué d'un matériau à dilatation nulle et réfléchissant le rayonnement infrarouge, comprenant les étapes consistant à :
- fournir un verre cru,
- déposer sur le verre cru une monocouche de réflexion cristalline réfléchissant le rayonnement infrarouge et ayant un indice de réfraction supérieur à 2,2 au moyen d'un procédé de pulvérisation, la couche réfléchissant le rayonnement infrarouge étant déposée sur un verre cru qui est ensuite céramisé.

12. Procédé de fabrication d'un vitrage en vitrocéramique transparent réfléchissant le rayonnement infra-rouge selon la revendication précédente, **caractérisé en ce que** le vitrage est déformé à chaud, en particulier courbé.

13. Procédé de fabrication d'un vitrage en vitrocéramique transparent réfléchissant le rayonnement infrarouge selon l'une des revendications précédentes, **caractérisé en ce que** le substrat en vitrocéramique est chauffé à au moins 550°C, de préférence au moins 850°C, après le dépôt de la couche réfléchissant le rayonnement infrarouge.

14. Procédé de fabrication d'un vitrage en vitrocéramique transparent réfléchissant le rayonnement infrarouge selon l'une des revendications précédentes, **caractérisé en ce que** la couche réfléchissant le rayonnement infrarouge est déposée en une épaisseur située entre 20 et 600 nm, de préférence entre 50 et 400 nm, en particulier préférentiellement entre 70 et 200 nm.
